**Europäisches Patentamt**

(19) **European Patent Office**

**Office européen des brevets**

(11) Veröffentlichungsnummer: **0 103 609**
**B1**

# (12) EUROPÄISCHE PATENTSCHRIFT

(45) Veröffentlichungstag der Patentschrift:
08.06.88

(21) Anmeldenummer: 83900957.8

(22) Anmeldetag: 16.03.83

(86) Internationale Anmeldenummer:
PCT/HU 83/00012

(87) Internationale Veröffentlichungsnummer:
WO 83/03232 (29.09.83 Gazette 83/23)

(51) Int. Cl.⁴: **B 62 K 15/00**

(54) **TASCHENFAHRRAD.**

(30) Priorität: 16.03.82 HU 79282

(43) Veröffentlichungstag der Anmeldung:
28.03.84 Patentblatt 84/13

(45) Bekanntmachung des Hinweises auf die Patenterteilung:
08.06.88 Patentblatt 88/23

(84) Benannte Vertragsstaaten:
AT BE CH DE FR GB LI LU NL SE

(56) Entgegenhaltungen:
EP-A-0 012 604
EP-A-0 019 144
FR-A-971 910
FR-A-973 308
FR-A-2 173 683
FR-A-2 225 328
GB-A-1 427 477
US-A-2 619 364
US-A-3 905 618
US-A-3 971 454

V.J. Pustovalov i dr. "Spravochnik velosipedista",
published in 1976, Verlag "Prapor" Kharkov, Siehe
S.46-48

(73) Patentinhaber: **LICENCIA Találmányokat Ertékesitö
Vállalat, Bajcsy Zs. u. 16, H-1051 Budapest (HU)**

(72) Erfinder: **CSIZMADIA, Lajos, Ülloi ut 163, H-1091
Budapest (HU)**

(74) Vertreter: **Lehn, Werner, Dipl.- Ing., Hoffmann,
Eitle & Partner Patentanwälte Arabellastrasse 4,
D-8000 München 81 (DE)**

## Beschreibung

## Technisches Gebiet

Die Erfindung betrifft ein Taschenfahrrad, das entsprechend seinem allgemein bekannten Verwendungszweck als Fahrrad ein zweiradiges, einspuriges Strassenverkehrsmittel mit Beinantrieb ist und ausser Betrieb zu Handtaschengrösse zusammengeklappt werden kann. Insbesondere betrifft die Erfindung ein Taschenfahrrad gemäß dem Oberbegriff des Anspruchs 1.

## Stand der Technik

Ein Taschenfahrrad der eingangs genannten Art ist aus der FR-A-973 308 bekannt.

Von den Fahrrädern dieser Art wird besonders verlangt, dass sie betriebssicher sind, den Anforderungen der Verkehrssicherheit entsprechen, dabei schnell in Betrieb genommen werden und ausser Betrieb gesetzt werden können. Weiterhin ist wichtig, dass sie klein sind, wenig Platz beansprüchen und überall, z. B. in der Wohnung, eventuell unter einem Möbelstück oder sogar unterm Bett oder im Vorzimmer, gegebenfalls auf der Arbeitsstelle, neben der Werkbank oder darunter untergebracht werden können, ohne dass sie - mit ihren herausragenden Teilen, z. B. Pedalen usw. - die vorbeigehenden Menschen verletzen können. Weiterhin wird verlangt, dass sie in zusammengeklapptem Zustand in der Hand in Massenverkehrsmitteln getragen werden können, ohne jemanden zu behindern oder Verletzungen oder einen Unfall zu verursachen, ausserdem dass sie leicht sind, und ihr Tragen keinen grossen physischen Kraftaufwand erfordert, wobei die Konstruktionselemente immer zusammenhängend verbunden sind und die Inbetriebnahme keine besonderen Fachkenntnisse verlangt.

Diese Anforderungen kann keins der bisher hergestellten Fahrräder restlos wegen ihrer Form, Grösse, Gewicht und Ausführung erfüllen.

Die gegenwärtige Form und Ausführung der Fahrräder kann fast auf ein Jahrhundert zurückblicken. Sie bestehen aus einem Rahmen, der aus einem dünnwandigen Stahlrohr zusammengeschweisst ist, einer Gabel, einem mit Pedalen durch Kettenübertragung angetriebenen Hinterrad und einem freilaufenden, durch eine Lenkstange steuerbaren Vorderrad, Sattel, Bremse und Hilfseinrichtungen. Diese Fahrräder können je nach der Rahmenform Herrenräder, bei denen der Sattel und die Lenkstange waagerecht durch ein Rohr verbunden sind, können Damenräder, bei denen kein waagerechtes Rohr vorhanden ist, und zusammenklappbare Fahrräder sein, die von Männern und Frauen gleichfalls verwendet werden können und nach dem Gebrauch im Interesse des geringen Platzbedarfes an einer bestimmten Stelle, meistens an einem unteren Punkt des Rahmens auseinandergenommen oder gelenkartig, durch Drehen der Räder aufeinander zu zusammengeklappt werden können. Unter diesen Fahrrädern gibt es auch solche, die für Rennen hergestellt sind, die leicht sind, aber deren Abmessungen denen der vorherigen entsprechen. Das Gemeinsame dieser Fahrräder ist, dass sie viel Platz beanspruchen, schwer sind, ihr Aufbewahren umständlich ist und sie nicht in Taschenform tragbar sind.

Die Hersteller der bekannten und im Handel erhältlicher, bzw. gebräuchlichen Fahrräder versuchen die beschriebenen Nachteile durch verschiedene Konstruktionslösungen zu beseitigen, so werden z. B. kleinere Raddurchmesser angewendet, der Rahmen und die Gabelkonstruktion aus einem Leichtmetallrohr hergestellt, und das Tragen soll durch den Ausbau der Räder und das Einklappen der Pedale erleichtert werden. Es sind auch Fahrräder bekannt, die völlig zerlegt werden können und in einem Rucksack oder in einer dafür hergestellten Trage- oder Lagerkiste untergebracht werden können.

Diese Lösungen machen zwar das Fahrrad für viele Zwecke geeignet, lösen aber nicht die Aufgabe, dass die Bewohner von Wohnsiedlungen ihre Fahrräder in geeigneter Weise, z. B. in ihrer Wohnung aufbewahren oder dass die Kinder sie leicht mitnehmen, in kurzer Zeit zerlegen und zusammensetzen können, und dass solche Fahrräder dann betriebssicher verwendet werden können, da die bisherigen Fahrräder so schwer sind, dass man sie nicht hoch in die Wohnung tragen kann, da es Räume zum Aufbewahren von Fahrrädern entweder nicht gibt oder aber sehr wenig Platz vorhanden ist, wobei das Aufbewahren auch nicht sicher ist. Für Ausflüge kann man sie in Massenverkehrsmitteln nicht transportieren, in anderen Transportmitteln erfordern sie zu viel Platz und ihr Transport ist sehr umständlich, auf die Arbeitsstelle können sie wiederum wegen ihrem grossen Platzbedarf nicht mitgenommen werden, deshalb ist ihre Verwendung vielerorts beschränkt.

Aus der FR-A-2 225 328 ist bereits eine auf relativ kleinen Raum zusammenklappbares Fahrrad bekannt das jedoch so aneinanderklappbar ist, daß sich dadurch die Breite verdoppelt.

Der Erfindung liegt die Aufgabe zugrunde, ein zusammenklappbares Taschen Fahrrad zu schaffen, das auf besonders einfache Weise in eine besonders kompakte Taschenform zusammenklappbar ist.

## Darstellung der Erfindung

Diese Aufgabe wird erfindungsgemäß durch die Merkmale des Anspruchs 1 gelöst.

Durch die Ausbildung der Rahmenteile als Schalen und durch daß Anklappen von drei Rahmenteilen in einer Ebene, d. h. der Langsebene des Fahrrads ist bei weitgehende Vermeidung einer Beschädigunggefahr der Teile des Fahrrads im zusammengeklappten Zustand eine optimal kompakte Taschenform geringer Breite erzielbar.

## Kurze Beschreibung der Zeichnungen

Weitere Einzelheiten der Erfindung werden im weiteren im Zusammenhang mit den beigelegten Zeichnungen ausführlicher beschrieben, die ein vorteilhaftes Ausführungsbeispiel darstellen. In den Zeichnungen zeigen:

Fig. 1 eine Seitenansicht des erfindungsgemässen Taschenfahrrades in (offenem) Gebrauchszustand,

Fig. 2 die gleiche Seitenansicht des Taschenfahrrades wie in Fig. 1, wobei das Vorderrad in den Rahmenraum gedreht ist,

Fig. 3 eine Seitenansicht des Taschenfahrrades, wobei das Hinterrad in den hinteren Rahmenteil gedreht ist,

Fig. 4 eine Seitenansicht des Taschenfahrrades, wobei der hintere Rahmenteil zum vorderen Rahmenteil gedreht und damit verbunden ist,

Fig. 5 eine Seitenansicht des Taschenfahrrades, wobei die Lenkstange in den vorderen Rahmenteil gedreht und die Sattelstange in ihren Halter gesteckt ist,

Fig. 6. das Taschenfahrrad in - durch Drehen des Sattelhalters zum vorderen Rahmenteil - taschenartig zusammengeklapptem und tragbarem Zustand, in Seitenansicht dargestellt,

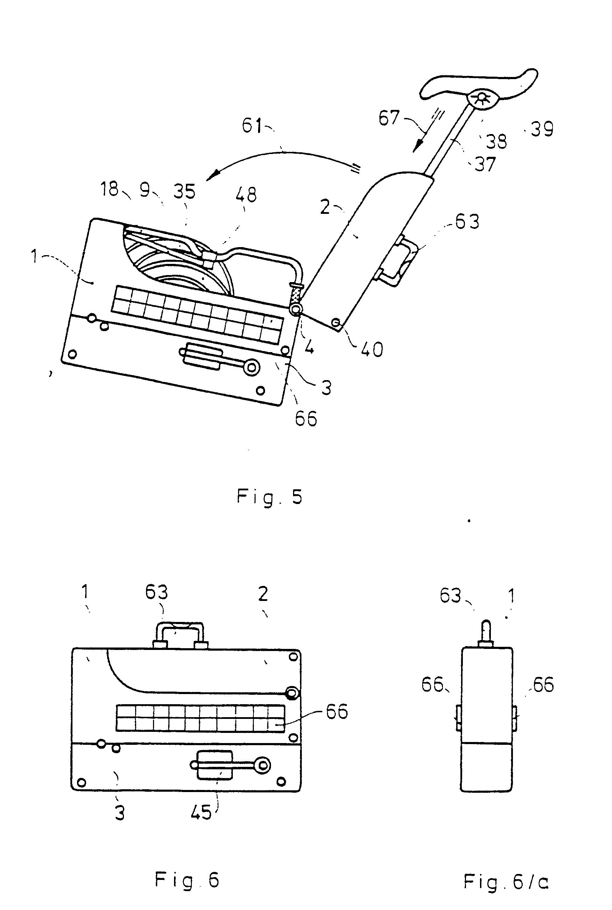

Fig. 6/a die Vorderansicht des Taschenfahrrades in Fig. 6,

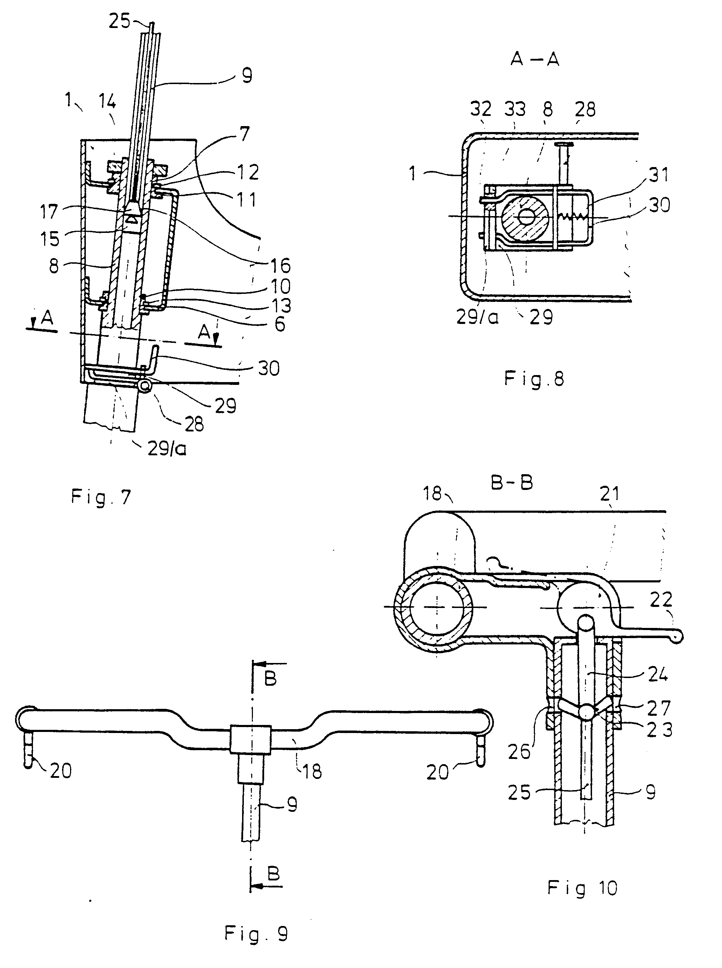

Fig. 7 die Konstruktionsteile der Lenkstange entlang ihrer Längsachse,

Fig. 8 einen Querschnitt über die Lenkstange nach der Linie A-A in Fig. 7,

Fig. 9 eine Vorderansicht des Lenkers,

Fig. 10 die Konstruktionseinzelheiten der Verbindung des Lenkers und der Lenkstange im Schnitt nach der Linie B-B in Fig. 9,

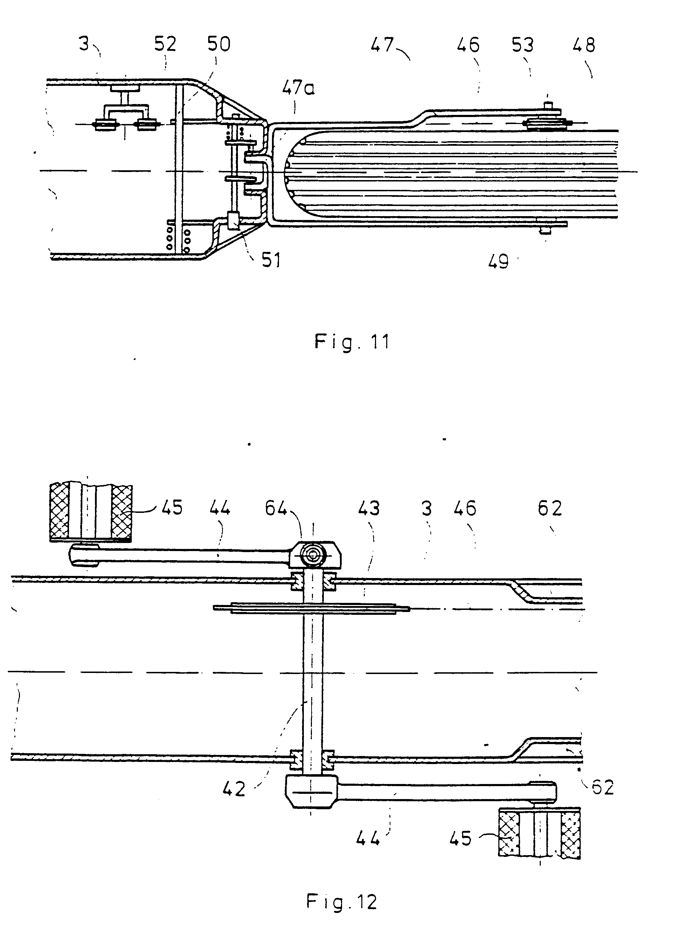

Fig. 11 die Verbindung des hinteren Rahmenteils und der radhaltenden Konsole, von unten veranschaulicht,

Fig. 12 veranschaulichende Skizze des Pedalantriebes.

## Bevorzugtes Ausführungsbeispiel

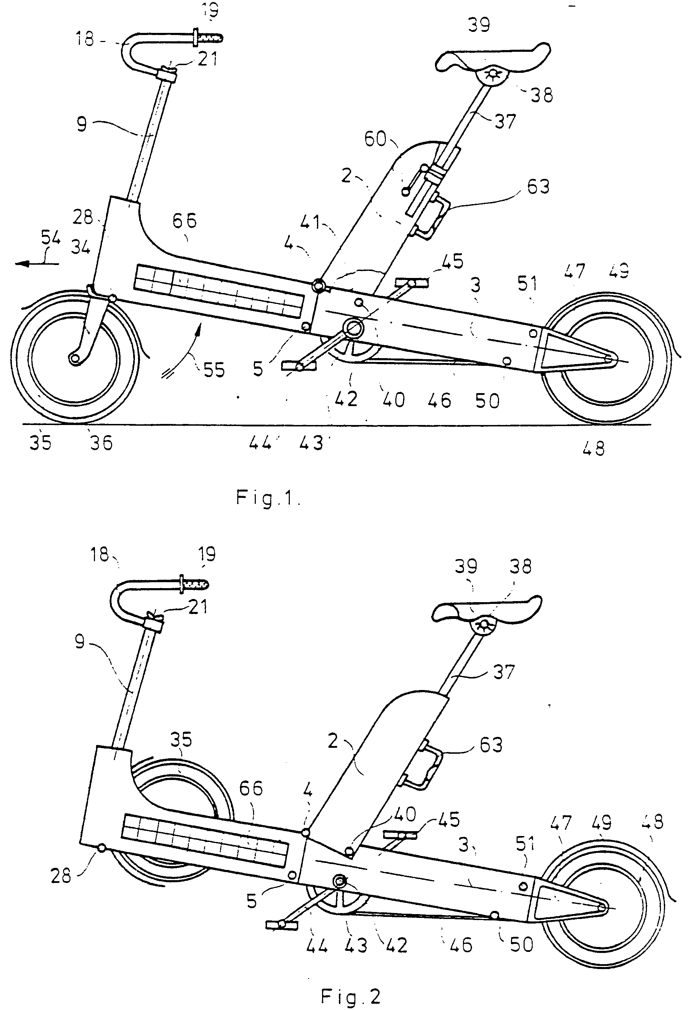

Der schalenkonstruktionsartig bzw. hohl gestaltete vordere Rahmenteil 1 ist ein Hauptelement des Taschenfahrrades, mit dem der Sattelhalter 2 durch einen Bolzen 4 und der um einen Bolzen 5 drehbare hintere Rahmenteil 3 drehbar verbunden sind (Fig. 1). Im vorderen Rahmenteil 1 ist der Lenkschaft-Unterteil 8 gelagert, und dort befinden sich auch das Gehäuse 6 eines unteren Kugellagers 10 (Fig. 7) und das Gehäuse 11 eines oberen Kugellagers 7, die durch obere und untere Sicherungsringe 12 bzw. 13 gesichert sind. Den Lenkschaft-Unterteil 8 hält eine Mutter 14 in der durch das obere Kugellager 7 eingestellten Lage. Der Lenkschaft-Oberteil 9 besitzt eine gelenkartige Verbindungskonstruktion 15, die beim Zusammenklappen die Unterbringung des Lenkers erleichtert und sich im Lenkschaft-Unterteil 8 befindet, deren konisches Ende 16 mit einer konischen Mutter 17 angezogen wird. Am Lenkschaft-Oberteil g befindet sich die Lenkstange 18, auf der die Griffe 19 und die Bremsarme 20 zu finden sind (Fig. 9). Durch das Drehen des Armes 22 eines Exzenters 21 wird der Lenkschaft-Oberteil 9 an den Mittelteil der Lenkstange 18 angezogen (Fig. 10).

Die Lenkstange 18 wird durch mit einer Ziehstange 24 bewegte konische Sicherungsstifte 23 gegen Verdrehen gesichert, die in die Bohrungen 27 und 26 eingreifen. Der Exzenter 21 betätigt durch das Bewegen von Arm 22 und über eine Stange 25 auch eine Kegelmutterverbindung 17 (Fig. 7, 10).

Am Lenkschaft-Unterteil 8 befindet sich ein um einen Bolzen 28 betätigbares Arretierband 29, worin ein Dorn 32 mit einer Ziehgabel 30 gegen eine Feder 31 in eine Bohrung 33 geschoben wird (Fig. 8). Das Arretierband 29/a gehört zur Gabel 34, worin sich das auf der Achse 36 freilaufendes Vorderrad 35 befindet (Fig. 1).

Der Sattelhalter hält den Sattelschaft 37 in einem dafür geeigneten Ziehband 60, und am Ende des Sattelschaftes 37 befindet sich der Sattel 39, der mit einem Gelenk 38 eingestellt werden kann (Fig. 1). Der Sattelhalter wird durch Federsicherungsstifte 40 mit dem hinteren Rahmenteil 3 in Verbindung gehalten. Im hinteren Rahmenteil 3 ist die Antriebsachse 42 untergebracht und gelagert, an beiden Enden mit einem Antriebskurbel 44 und einem Pedal 45 sowie dem Antriebskettenrad 43. Im hinteren Rahmenteil 3 kann auf dem Bolzen 50 die das Hinterrad 48 haltende Konsole 17 verschwenkt werden, wobei das Hinterrad 48 mit der Konsole 47 durch einen in die armartigen Aufsätze 47/a der Konsole einrastenden Federsicherungsstift 51 verbunden und in Position gehalten sind (Fig. 11). In der um den Bolzen 50 drehbaren Konsole 47 ist das Hinterrad 48 mit seiner Achse 49 sowie mit dem gebogenen Kettenrad 53 untergebracht und gelagert, das die Antriebskette 46 über die Kettenspanner 52 auf die allgemein bekannte Weise antreibt.

Die sich in der Nähe des Antriebskettenrades 43 befindenden zwei Antriebspedalarme 44 können nach dem Lösen einer Klemme 64 gedreht werden und durch das Eindrehen der Pedale 45 in die Mute 62 gebracht werden (Fig. 1 und 12). Die Solarzellen 66 an der Seite des vorderen Rahmenteils 1 laden die Elektrobatterie.

Das Taschenfahrrad, dessen Konstruktion detailliert beschrieben wurde, funktioniert wie folgt:

In Betriebzustand - d. h. in offenem Zustand - kann es wie die allgemein bekannten Fahrräder verwendet werden, d. h. man setzt sich auf den Sattel 39, fasst den Griff 19 mit beiden Händen an, beugt sich etwas nach vorn und stellt das Pedal 45 von der senkrechten in Fahrtrichtung 54 nach vorn, dann wird das Pedal 45 mit dem Fuss gedrückt, und der Radfahrer stösst sich mit dem anderen Fuss ab und kann durch die dem Uhrzeigersinn entgegengerichteten Drehbewegung des Pedals 54 - siehe Fig 1 - fahren.

Das Fahrrad kann durch Ziehen des Bremsarmes 20 oder Zurückhalten bzw. der Fahrtrichtung entgegengesetztes Drehen des Pedals 45, d. h. durch sogenanntes Kontrabremsen, angehalten werden. Das Ausserbetriebsetzen bzw. Zusammenklappen des Taschenfahrrades erfolgt wie folgt:

Das Taschenfahrrad wird senkrecht gestellt, mit einer Hand wird die Ziehgabel 30 nach hinten gezogen und so die Radgabel 34 entriegelt, und zusammen mit dem Vorderrad 35 in Richtung von Pfeil 55 in den Raum des gehäuseartigen vorderen Rahmenteils 1 gedreht (Fig. 1 und 2).

Dann müssen auf dem hinteren Rahmenteil 3 die Federsicherungsstifte 51 aus den Aufsätzen 47/a der Konsole 47 gelöst werden, und dann wird die Konsole 47 zusammen mit dem Hinterrad 48, der Achse 49 und dem angetriebenen Kettenrad 53 in die Richtung von Pfeil 56 um den Bolzen 50 in den hinteren Rahmenteil 3 gedreht (Fig. 1 und 11).

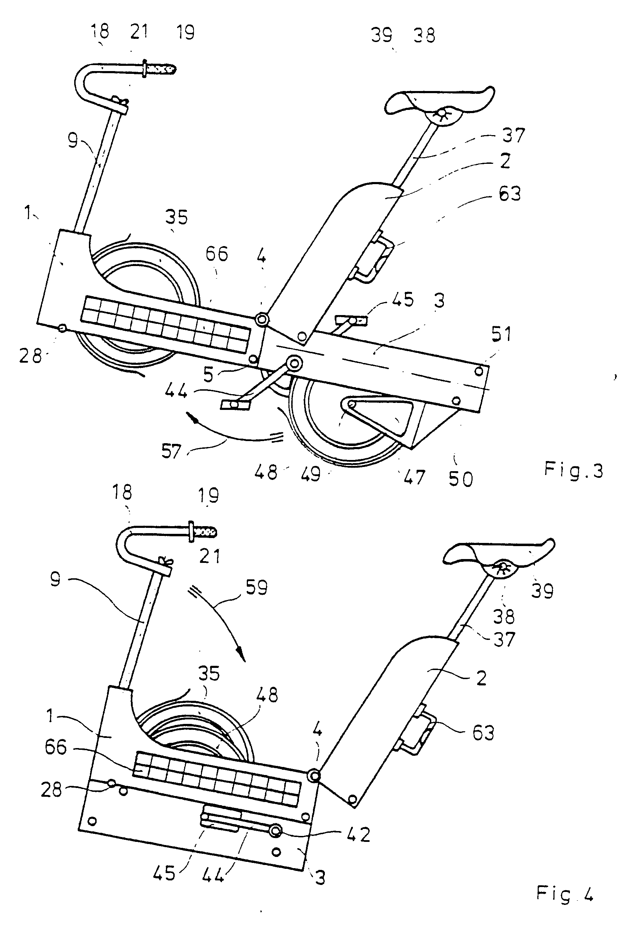

Als nächster Schritt wird der Federsicherungsstift 40 herausgedrückt bzw. gelöst und der hintere Rahmenteil 3 um den Bolzen 5 in Richtung von Pfeil 57 neben den vorderen Rahmenteil 1 gedreht (Fig. 3).

Dann wird der Griff 22 des Exzenters 21 gedreht, die konischen Sicherungsstifte 23 aus den Bohrungen 26 und 27 werden herausgenommen (Fig. 10), während mit der Stange 25 auch die Kegelmutterverbindung 17 gelöst wird. (Fig. 7) Durch Drehbewegungen um das Gelenk 15 werden der Lenkschaft-Oberteil 9 und die Lenkstange 18 in Richtung der Längsachse des vorderen Rahmenteils 1 gedreht, dann in Richtung 59 in den vorderen Rahmenteil 1 nach Fig. 4 und in die Taschenposition nach Fig. 5.

Nach dem Zusämmenklappen wird der Sattel 39 um das Gelenk 38 gedreht und durch Lockern des Ziehbandes 60 (Fig. 1) wird der Sattelschaft 37 in Richtung 57 in den Sattelhalter 2 geschoben. Dann wird der Sattelhalter 2 in Richtung 61 gedreht und in den vorderen Rahmenteil 1 gepasst, wie in Fig. 5 und 6 dargestellt.

Das Pedal 45 wird verdreht, die Antriebskurbel 44 werden in den im hinteren Rahmenteil 3 befindlichen Raum 62 untergebracht und so gelangt das Taschenfahrrad in einen taschenartigen, zusammengeklappt tragbaren Zustand. Das Tragen wird durch den Griff 63 erleichtert, der in Betriebzustand als Ergänzungseinrichtung dient, da man ihn als Rücklicht verwenden kann (Fig. 6).

Bei Inbetriebnahme muss die obige Reihenfolge umgekehrt eingehalten werden. Mit den Solarzellen 66 kann die Elektrobatterie des Fahrrades ständig gespeist werden, von wo die Energieversorgung der Baueinheiten - weisses Licht, rotes Licht - je nach Bedarf erfolgen kann.

Das Taschenfahrrad kann für Kinder in den üblichen, bekannten und in Handel erhältlichen Grössen und für Erwachsene in den üblichen Damen- und Herrentypen hergestellt werden; die Längen- und Breitenabmessungen der vorderen und hinteren Rahmenteile dieser Typen bestimmen die sich aus dem Zusammenklappen und der Aufnahme der Teile notwendigerweise ergebenden Taschenabmessungen.

Das aus der obigen Beschreibung der Erfindung bekannte Taschenfahrrad besitzt gegenüber den bisherigen folgende wichtige Vorteile:

a) wenn es nicht gebraucht wird und als Tasche zusammengekleppt ist, kann es in kurzer Zeit in Betrieb genommen werden,

b) es besitzt kein Ersatzteil, das gesondert ist oder keine Konstruktionsverbindung hat, was auschliesst, dass Teile verloren werden können,

c) es kann in Ketten-, Zahnkeilriemen-, Kardanachsen-, und gebogener Achsenausführung hergestellt werden,

d) von den üblichen Fahrrädern abweichende besondere Instandhaltungsanforderungen gibt es nicht, die Montage erfordert nicht mehr Fachwissen als bei jenen erforderlich ist,

e) in zusammengeklapptem Zustand nimmt es wenig Platz ein,

f) es ist leicht und - auch in Massenverkehrsmitteln - tragbar,

g) es kann in einer Wohnung, im Büro, auf der Arbeitsstelle ohne Unfallsgefahr bzw. mit geringerer Gefahrmöglichkeit als bisher untergebracht und verwendet werden,

h) es hat einfache Bestandteile,

i) die für den Betrieb der Bauteile notwendige Elektroenergie können Solarzellen liefern, denen die Taschenoberfläche eine sehr vorteilhafte Unterbringungs- und Beleuchtungsmöglichkeit bietet.

## Patentansprüche

1. Zusammenklappbares Taschenfahrrad, das ein Vorderrad, ein Hinterrad, ein Triebwerk für das Hinterrad einen Lenker mit einem Lenkschaft, einen Sattel mit einstellbarem Sattelschaft sowie miteinander gelenkig verbundene Rahmenteile aufweist, wobei die Rahmenteile (1, 2, 3) als hohle Schalenkonstruktion ausgebildet sind, die um Bolzen (4, 5) verschwenkbar zu einer geschlossenen, kompakten Tragtasche vereinigt werden können, wobei im zusammengeklappten Zustand der Lenker und das Vorderrad (35) durch den vorderen Rahmenteil (1), der Sattel (39) mit dem Sattelschaft (37) durch den den Sattel tragenden Rahmenteil (2), und das Hinterrad (48) mit dem Triebwerk durch den hinteren Rahmenteil (3) aufgenommen werden, während im Betriebszustand die Rahmenteile (1, 2, 3) durch einen den Satteltragenden Rahmenteil (2) und den hinteren Rahmenteil (3) verbindenden Federsicherungsstift (40) arretiert sind, dadurch gekennzeichnet, dass die Rahmenteile in des gleichen Ebene schwenkbar sind, daß die Bolzenachse senkrecht zur längsebene des Fahrrades liegt und daß des Fahrad aus drei schalenförmigen Teilen besteht.

2. Zusammenklappbares Taschenfahrrad nach Anspruch 1, dadurch gekennzeichnet, dass das Hinterrad (48) in mit dem hinteren Rahmenteil (3) über einen Bolzen (50) gelenkartig verbundenden und in den Hohlraum des hinteren Rahmenteils (3) verschwenkbaren Konsole (47) gelagert ist, deren mit dem hinteren Rahmenteil (3) verbundene, gelenkartige Verbindung durch einen Federsicherungsstift (51) arretiert und aus der gesperrten Lage gelöst werden kann.

3. Zusammenklappbares Taschenfahrrad nach Anspruch 1 oder 2, dadurch gekennzeichnet, dass die Federsicherungsstifte (40, 51) einen gegen die Kraft einer Feder verschiebbaren Schaft sowie wenigstens einen, vom Schaft hinausragenden, im Winkel zurückgebogenen Vorsprung aufweisen, der durch die Bohrungen der miteinander zu verbindenden Teile (2, 3; 3, 47) hindurchragt.

4. Zusammenklappbares Taschenfahrrad nach Anspruch 1, dadurch gekennzeichnet, dass die Achse (42) des Antriebskettenrades (43) des Triebwerkes eine zum Verschwenken der Antriebskurbel (44) leicht lösbare Verbindung aufweist, die als ein durch eine Blattfeder in einer Nut der Achse (42) gehaltener Riegel (64) ausgeführt ist.

5. Zusammenklappbares Taschenfahrrad nach Anspruch 1, dadurch gekennzeichnet, dass das Antriebkettenrad (43) durch ein Zahnrad ersetzt ist, das über eine mit einer Klauenkupplung versehene Gelenkwelle mit dem Hinterrad (48) verbunden ist.

6. Zusammenklappbares Taschenfahrrad nach Anspruch 1, dadurch gekennzeichnet dass im vorderen Rahmenteil (1) Solarzellen (66) für die Stromversorgung der Beleuchtungsanlagen des Fahrrades vorgesehen sind.

## Claims

1. Foldable portable bicycle including a front wheel, a rear wheel, a driving mechanism for the rear wheel, a handle bar with a handle bar steering-shaft, a saddle with an adjustable saddle support shaft as well as frame members mutually connected in a hinged manner, said frame members (1, 2, 3) being formed as a hollow shell construction, which can be united by pivoting about bolts (4, 5) to form a closed compact portable case, whereby in the folded condition the handle bar and the front wheel (35) are accomodated by the front frame member (1), the saddle (39) with the saddle support shaft (37) by the saddle supporting frame member (2) and the rear wheel (48) with the driving mechanism by the rear frame member (3), while in the operation condition the frame parts (1, 2, 3) are locked by a spring retention pin (40) which connects the saddle supporting frame member (2) and the rear frame member (3),
characterized in that
the frame members are pivotable in the same plane, that the bolt axis lies perpendicular to the longitudinal plane of the bicycle and that the bicycle consists of three hollow shell-like parts.

2. Foldable portable bicycle according to claim 1,
characterized in that
the rear wheel (48), is journaled in a bracket being pivotably connected with the rear frame member (3) by a bolt (50) and being pivotable into the hollow space of the rear frame member (3), the pivotable connection of the bracket with the rear frame member (3) can be locked and released out of the locked position by a spring retention pin (51).

3. Foldable portable bicycle according to claims 1 or 2,
characterized in that
the spring retention pins (40, 51) have a shaft movable against the force of a spring as well as at least one angularly bent back protrusion projecting from the shaft and projecting through the holes of the parts (2, 3; 3, 47) which are to be connected together.

4. Foldable portable bicycle according to claim 1,
characterized in that
the axle (42) of the chain drive wheel (43) of the driving mechanism has an easily releasable connection for pivoting the drive pedals (44), which connection is formed as a bar held by a plate spring in a slot of the axle (42).

5. Foldable portable bicycle according to claim 1,
characterized in that
the chain drive wheel (43) is replaced by a gear wheel which is connected with the rear wheel (48) via a propeller shaft provided with a claw clutch.

6. Foldable portable bicycle according to claim 1,
characterized in that
solar cells (66) are provided in the front frame member (1) for the energy supply to the lighting equipment of the bicycle.

## Revendications

1. Vélo pliable sous la forme d'une valisette, présentant une roue avant, une arrière, un mécanisme d'entraînement pour la roue arrière, un guidon avec un support de guidon, une selle avec un tube porte-selle réglable ainsi que des parties de cadre reliées les unes aux autres de façon articulée, les parties (1, 2, 3) du cadre étant rélisées sous la forme d'une structure en coque creuse et pouvant, en pivotant autour d'axes d'articulation (4, 5) être réunies sous la forme d'une valisette compacte et fermée, le guidon et la roue avant (35) étant logés, en position pliée, dans la partie avant (1) du cadre, la selle (39) avec le tube porte-selle (37) dans la partie (2) du cadre pour le support de selle et la roue arrière (48) avec le mécanisme d'entraînement dans la partie arrière (3) du cadre, tandis qu'en état de fonctionnement, les parties (1, 2, 3) du cadre sont bloquées par une goupille de sécurité à ressort (40) reliant la partie (2) du cadre pour le support de selle et la partie arrière (3) du cadre, caractérisé en ce que les parties du cadre peuvent pivoter dans le même plan, en ce que les axes d'articulation sont perpendiculaires au plan longitudinal du vélo et en ce que le vélo est composé de trois parties en forme de coque.

2 Vélo pliable sous la forme d'une valisette selon la revendication 1, caractérisé en ce que la roue arrière (48) est logée dans une console (47) qui est articulée par un axe (50) sur la partie arrière (3) du cadre, qui peut pivoter dans l'espace intérieur de la partie arrière (3) du cadre et dont la liaison articulée avec la partie arrière (3) du cadre peut être bloquée par une goupille de sécurité à ressort (51) et être libérée de la position de blocage.

3. Vélo pliable sous la forme d'une valisette selon la revendication 1 ou 2, caractérisé en ce que les goupilles de sécurité à ressort (40, 51) présentent une tige déplaçable contre la force d'un ressort ainsi qu'au moins une partie en saillie qui dépasse de la tige, est recourbée en formant un angle et traverse des trous des parties (2, 3 ; 3, 47) devant être assemblées les unes avec les autres.

4. Vélo pliable sous la forme d'une valisette selon la revendication 1, caractérisé en ce que l'axe (42) du plateau d'entraînement (43) du mécanisme d'entraînement présente un assemblage qui est facilement détachable pour le pivotement de la manivelle d'entraînement (44) et qui est réalisé sous la forme d'un verrou (64) maintenu par un ressort à lames dans une rainure de l'axe (42).

5. Vélo pliable sous la forme d'une valisette selon la revendication 1, caractérisé en ce que le plateau d'entraînement (43) est remplacé par une roue dentée qui est reliée à la roue arrière (48) par l'intermédiaire d'un arbre de transmission muni d'un accouplement à griffes.

6. Vélo pliable sous la forme d'une valisette selon la revendication 1, caractérisé en ce que des cellules solaires (66) destinées à l'alimentation électrique des dispositifs d'éclairage du vélo sont prévues dans la partie avant (1) du cadre.

Fig.1.

Fig.2

1

Fig. 3

Fig. 4

Fig. 5

Fig. 6

Fig. 6/a

3

Fig. 7

Fig. 8

A – A

Fig. 9

Fig 10

B - B

Fig. 11

Fig. 12